# EUROPEAN PATENT APPLICATION

(11) **EP 2 407 872 A2**
(43) Date of publication of application: **18.01.2012**
(21) Application number: 11174288.8
(22) Date of filing: 15.07.2011
(51) Int. Cl.: G06F 3/048, H04N 5/44

(54) **Coordinated virtual input system**

(30) Priority: 16.07.2010 TW 099123517; 18.01.2011 TW 100101809
(71) Applicant: Sunplus Technology Co., Ltd, Hshinchu 300 (TW)
(72) Inventor: Yu, Siu-Leong, 112 Taipei City (TW)
(74) Representative: Tomlinson, Kerry John

(57) **Abstract**

A coordinated virtual input system includes a coordinated virtual keyboard (13) having multiple virtual keys arranged according to a first direction and a second direction. Each virtual key is associated with a predefined symbol or user option, and corresponds to a set of coordinate digits respectively in the first direction and the second direction. A display device (11) displays the virtual keyboard. A remote control (12) controls the display device and has an input function key, a set of direction keys, and a set of digit keys. By pressing the input function key, the display displays the virtual keyboard in an On Screen Display manner. By pressing the set of digit keys to input the set of coordinate digits respectively in the first direction and the second direction to select a virtual key, the predefined symbol or user option corresponding to the virtual key selected is inputted.

## Description

### BACKGROUND OF THE INVENTION

### 1. Field of the Invention

The present invention relates to an input device and, more particularly, to a coordinated virtual input system with which a remote control is employed for input.

### 2. Description of Related Art

Digital electric appliances have the essential functions of information share, easy use, and personalization. For example, information products functioning as electric appliances, electric appliances functioning as information products, and application products providing personal operations and relaxations are regarded as a part of the digital electric appliances. Upon current development of digital electric appliances, the mainstream includes LCD TVs, set-top boxes, DVD players, and blue ray DVD players.

Since the digital electric appliances are generally placed in a living room to provide various entertainments, unlike personal computers are used in works, they do not connect with a keyboard and a mouse. Thus, a remote control, wireless keyboard, voice recognition, gesture recognition, a remote control with a touch screen, and the like are used as an input device in the digital electric appliances. However, such input devices on the digital electric appliances cannot satisfy the user requirements in cost, convenience, and easy learning.

All typical large-size multimedia displays (especially 30-inch and above) acting as televisions or monitors are desktop devices, which can connect with a personal computer to provide the functions of operation, document process, online access, or email receiving and sending. However, since the display has a large size, a user has to keep a distance at least 1.5 meter from the screen of a display for a comfortable viewing. When a personal computer connects to a large-size display, the entire appearance is very disordered and complicated because the personal computer has various connected cables and peripherals, such as a display, VGA cable, speaker, sound cable, keyboard, mouse, power line, and the like. Therefore, it is desired to have a multimedia display and a personal computer combined in design. If a user desires to operate the multimedia display as a TV multimedia display, the multimedia display combined with the personal computer is typically controlled by a remote control. In operating the personal computer, a mouse is used to control a keyboard as an input device. As a result, two input devices are required, which causes an inconvenience in use. For example, US Patent No. 6,757,707 entitled "Displayed complementary content sources in a web-based TV system" granted to Houghton, et al. has disclosed a web-based TV system in which a remote keyboard and a remote control are used to input words and take a control, which may cause the inconvenience in use.

Accordingly, a typical approach is to use the operation of a control as the operation of the multimedia display of a television (i.e., a TV multimedia display) and as the operation of the multimedia display of a personal computer (i.e., a PC multimedia display) for proceeding online operations without requiring complex input. However, in operating online access, if it is required to input context, for example, in inquiring the timetable, the operation also becomes inconvenient.

Furthermore, another approach is to press an operation key of the input unit (remote control) in an interactive TV system to output a key code to a control unit for converting the key code into a computer keyboard code and sending the computer keyboard code to a browser to thereby achieve the effect of using the remote control to input the computer keyboard code. However, only one computer keyboard code (backspace or delete key) can be emulated because the remote control has only one operation key, resulting in difficulty in inputting arbitrary words. A further approach is to present a virtual keyboard on the screen of a display, to use up, down, left and right keys of the input unit (remote control) to move on the virtual keyboard, and to use an operation key to select a virtual key on the virtual keyboard thereby achieving the effect of inputting arbitrary words. However, such a way requires pressing the direction keys multiple times for inputting the desired words, which causes inconvenience in use as well.

Therefore, it is desirable to provide an improved coordinated virtual input system to mitigate and/or obviate the aforementioned problems.

### SUMMARY OF THE INVENTION

The object of the present invention is to provide a coordinated virtual input system, which can reduce the number of input keys pressed by a remote control so as to achieve a quick input and enhance the friendliness to human machine interface, thereby increasing the added value on a multimedia display.

According to a first aspect of the invention, a coordinated virtual input system is provided. The system includes: a coordinated virtual keyboard having multiple virtual keys, each being arranged according to a first direction and a second direction and corresponding to a set of coordinate digits in the first direction and the second direction; a display device for displaying the coordinated virtual keyboard; and a remote control having an input function key, a set of direction keys, and a set of digit keys for remotely controlling the display device, wherein the display device displays the virtual keyboard in an on-screen display manner when the input function key is pressed, and the set of digit keys are used to input the coordinate digits respectively in the first direction and the second direction so as to select a virtual key corresponding to the coordinate digits and input a predefined symbol or user option corresponding to the virtual key.

According to a second aspect of the invention, a coordinated virtual input system is provided. The system includes a coordinated virtual mouse area having multiple virtual locations arranged according to a first direction and a second direction and each virtual location corresponding to a set of coordinate digits respectively in the first direction and the second direction; a display device for displaying a mouse cursor and the coordinated virtual mouse area; and a remote control having a movement function key, a set of direction keys, and a set of digit keys for remotely controlling the mouse cursor, wherein the coordinated virtual mouse area is displayed on the display device by pressing the movement function key, and the mouse cursor is moved to a virtual location corresponding to the set of coordinate digits when the set of digit keys are used to input the set of coordinate digits respectively in the first direction and the second direction.

According to a third aspect of the invention, a coordinated virtual input system is provided. The system includes a virtual input area having multiple virtual locations; a microcomputer control unit for analyzing a display content or a user option, so as to add a number option; a display device for displaying a mouse cursor and the virtual input area; and a remote control having a set of direction keys and a set of digit keys for remotely controlling the mouse cursor, wherein the number option is selected by pressing the set of digit keys, and the mouse cursor is moved to the display content or user option corresponding to the number option.

According to a fourth aspect of the invention, a coordinated virtual input system is provided. The system includes a virtual keyboard having multiple virtual keys in a nine-square arrangement, each virtual key corresponding to a set of digits in the nine-square arrangement; a display device for displaying the nine-square virtual keyboard; and a remote control having an input function key, a set of direction keys, and a set of digit keys for remotely controlling the display, wherein the nine-square virtual keyboard is shown on the display by pressing the input function key, and a symbol or menu item corresponding to a virtual key of the nine-square virtual keyboard is selected when the set of digit keys are used to input the set of digits in the nine-square arrangement.

Other objects, advantages, and novel features of the invention will become more apparent from the following detailed description when taken in conjunction with the accompanying drawings.

### BRIEF DESCRIPTION OF THE DRAWINGS

FIG. 1 is a schematic view of a coordinated virtual input system according to the invention;
FIG. 2 is a system block diagram of a preferred embodiment of the coordinated virtual input system according to the invention;
FIG. 3 is a schematic view of the remote control of FIG 1 according to the invention;
FIG. 4 is a system block diagram of another preferred embodiment of the coordinated virtual input system according to the invention;
FIG. 5 is a schematic view of a coordinated virtual keyboard according to the invention;
FIG. 6 is a schematic view of an input mode of the coordinated virtual input system according to the invention;
FIG. 7 is a schematic view of another input mode of the coordinated virtual input system according to the invention;
FIG. 8 is a schematic view of another input mode of the coordinated virtual input system according to the invention;
FIG. 9 is a schematic view of another input mode of the coordinated virtual input system according to the invention; and
FIG. 10 is a schematic view of a coordinated virtual keyboard in a nine-square arrangement according to the invention..

### DETAILED DESCRIPTION OF THE PREFERRED EMBODIMENT

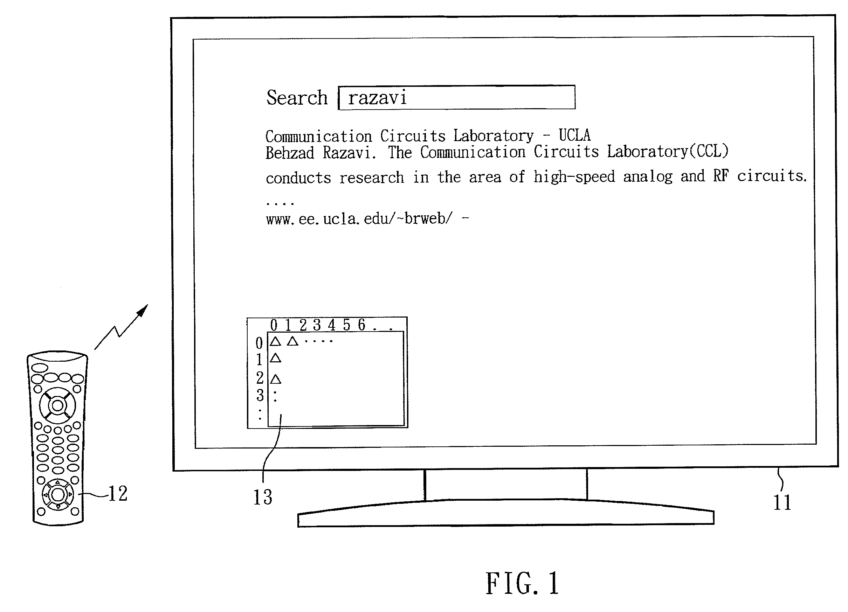

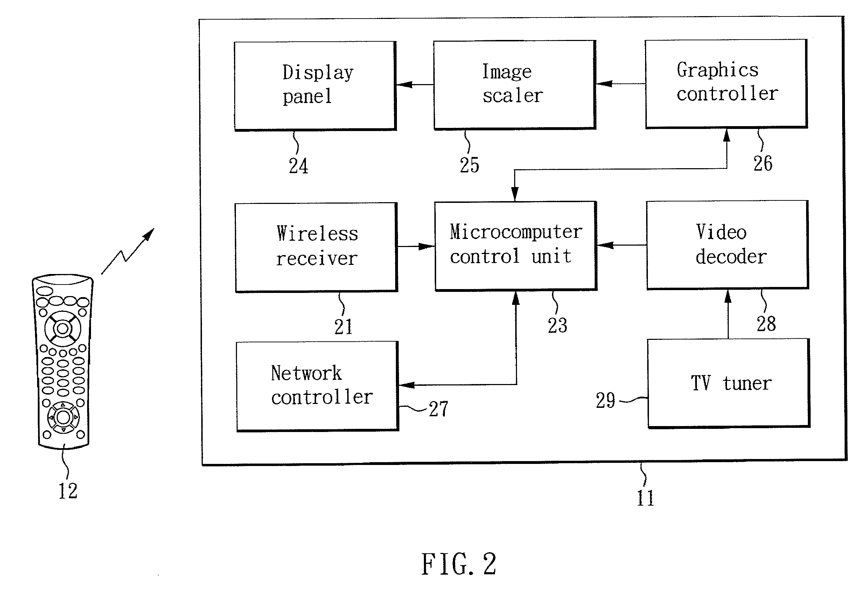

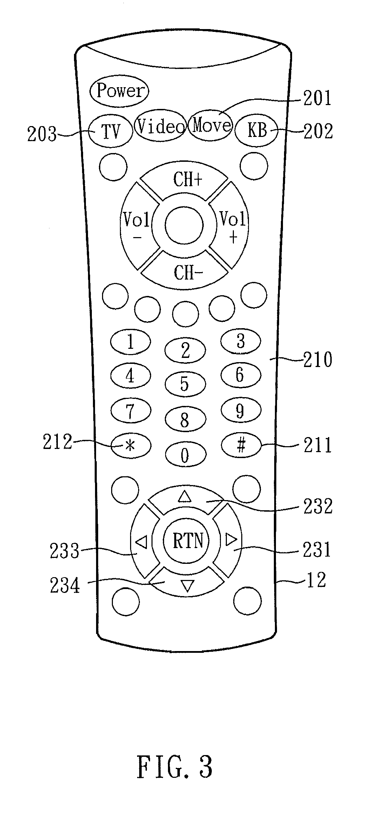

The invention relates to a coordinated virtual input system, which may be applied to a TV system, for example. FIG. 1 is a schematic view of a coordinated virtual input system using a remote control to input keys of a keyboard according to the invention. FIG 2 is a system block diagram according to a preferred embodiment of the invention. FIG. 3 is a schematic view of the remote control of FIG. 1 according to a preferred embodiment of the invention. In FIGS. 1-3, the coordinated virtual input system of the invention includes a display device 11, a remote control 12, and a coordinated virtual keyboard 13.

As shown in FIGS. 1 and 2, the display device 11 includes a wireless receiver 21, a microcomputer control unit 23, a display panel 24, an image scaler 25, a graphics controller 26, a network controller 27, a TV tuner 29 and a video decoder 28. The display device 11 can be operated in various modes such as a TV mode and a display mode. For operating in the TV mode, the display device 11 displays an input TV image through the display panel 24. For operating in the display mode, the network controller 27 performs a network connection and a network data operation processing, and the display panel 24 of the display device 11 displays the display output of a webpage. The wireless receiver 21 receives commands generated from the remote control 12 in a wireless manner. The microcomputer control unit 23 is electrically connected to the wireless receiver 21, the graphics controller 26, the network controller 27, and the video decoder 28. The display panel 24 of the display device 11 is provided for displaying frame images of TV or webpage. The image scaler 25 scales the frame images for displaying, and also provides the function of on screen display (OSD). In addition, in the TV mode, the TV tuner 29 and the video decoder 28 are employed for allowing a user to select a desired TV channel. The microcomputer control unit 23 displays TV channels or graphics outputted by the TV tuner 29 on the display panel 24 through the graphics controller 29 and the image scaler 25. The microcomputer control unit 23 is also capable of performing an online access through the network controller 27.

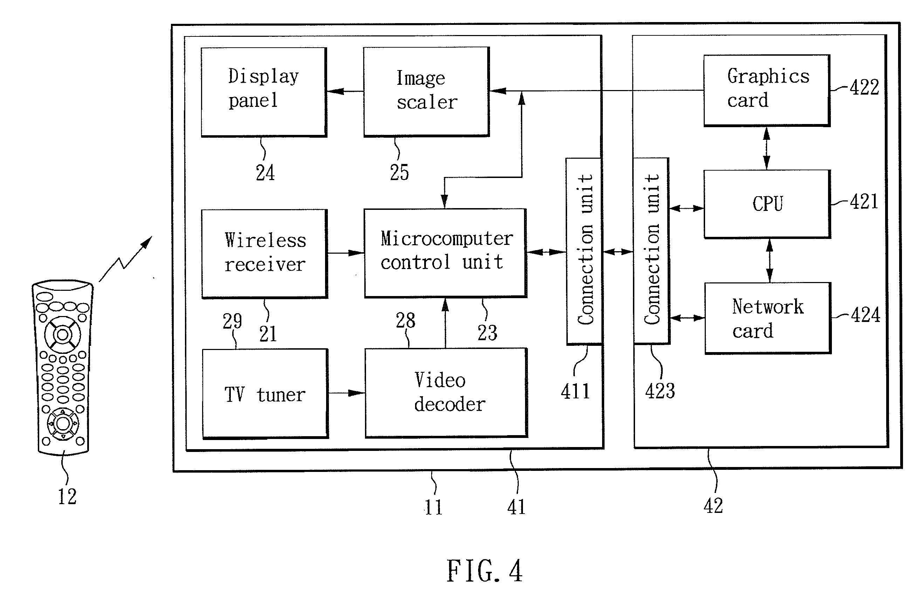

FIG. 4 is a system block diagram of another preferred embodiment of the coordinated virtual input system according to the invention. The display device 11 has a display unit 41 and a personal computer unit 42. The display unit 41 includes a wireless receiver 21, a microcomputer control unit 23, a display panel 24, an image scaler 25, a connection unit 411, a TV tuner 29 and a video decoder 28. The personal computer unit 42 includes a CPU 421, a graphics card 422, a connection unit 423 and network card 424. The display device 11 can be operated in various modes, such as a TV mode and a computer mode. For operating in the TV mode, the display device 11 displays an input TV image through the display panel 24. For operating in the computer mode, the personal computer unit 42 performs a data operation processing, and the display panel 24 of the display device 11 displays the output of the personal computer unit 42.

The structure and the operation of the display unit 41 are similar to those of the display device 11 shown in FIG. 2, and thus a detailed description is deemed unnecessary. In the personal computer unit 12, the graphics card 22 performs a graphic processing. The CPU 421 performs operations such as arithmetic and logic processing. The network card 424 is used to get an online access. The connection unit 423 of the personal computer unit 42 is electrically connected to the connection unit 411 of the display unit 41. In this embodiment, the connection unit 411 is an internal integrated circuit (IIC) control bus, an RS-232 control bus, or the like.

The remote control 12 can remotely control the display device 11. As shown in FIG. 3, the remote control 12 includes a movement function key 201, an input function key 202, a TV function key 203, a set of digit keys 210, a right direction key 231, an up direction key 232, a left direction key 233, and a down direction key 234. The system is switched between the TV mode and the display mode by pressing the TV function key 203 of the remote control 12. In other embodiments, the mode switching can be performed by other keys. The movement function key 201 and the input function key 202 can be an option, i.e., physically provided on the remote control 12 or removed from the remote control 12. When the remote control 12 does not have the movement function key 201 and the input function key 202, The functions thereof can be achieved by other keys, or their combination, on the remote control 12.

When the display device 11 is operated at the display mode and an input such as a name "razavi" for online inquiring, as shown in FIG. 1, is required, the input function key 202 of the remote control 12 is pressed to display a coordinated virtual keyboard 13 on the display device 11 in an on-screen display (OSD) manner, and pressed again to close the coordinated virtual keyboard 13.

In other embodiments, the coordinated virtual keyboard 13 can be displayed by pressing the key "*" 212, or the key "#" 211 of the digit keys 210 of the remote control 12, and closed by pressing the key "*" or "#" again.

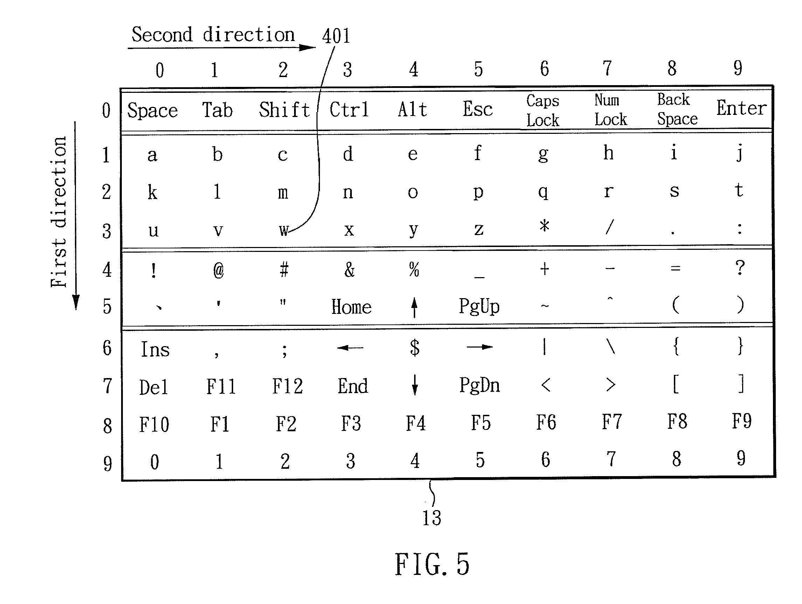

FIG. 5 is a schematic view of the coordinated virtual keyboard 13 according to the invention. As shown in FIG. 5, the coordinated virtual keyboard 13 has multiple virtual keys, each associated with a predefined symbol or user option. The virtual keys are arranged based on a first direction and a second direction, and each virtual key corresponds to a set of coordinate digits in the first direction and the second direction.

The predefined symbol of each virtual key can be an alphabet, a Chinese phonetic symbol, a Chang Jai radical, or a Japanese phonetic alphabet.

The set of coordinate digits of each virtual key is comprised of two digits where the first one indicates a coordinate of the virtual key in the first direction and the second one indicates the coordinate of the virtual key in the second direction. Accordingly, the digit keys 210 of the remote control 12 can be used to input a coordinate digit respectively in the first direction and the second direction, thereby selecting a virtual key of the coordinated virtual keyboard 13 and inputting a symbol corresponding to the virtual key selected.

For example, as shown in FIG. 5, a lowercase letter "w" 401 is indicated by the set of coordinate digits 3 and 2 respectively in the first direction and the second direction. Namely, a user can select the virtual key "w" of the coordinated virtual keyboard 13 by pressing the keys "3" and "2" of the digit keys 210 only, so the lowercase letter "w" is inputted.

Thus, multiple virtual keys of the coordinated virtual keyboard 13 are selected by successively inputting the coordinate digits in the first and second directions, so the corresponding symbols are inputted. For example, in order to inquire the name "razavi" of FIG. 1, the set "2" and "7", the set "1" and "0", the set "3" and "5", the keys "1" and "0", the keys "3" and "1", and the keys "1" and "8" are inputted to thereby complete the "razavi" input.

In other embodiments, after the coordinate digit in the first direction is inputted, the corresponding row in the coordinated virtual keyboard 13 is highlighted to allow a user to have an easy view and input a coordinate digit in the second direction. Namely, for inputting "r", the second row in the coordinated virtual keyboard 13 is highlighted after "2" is input to allow the user to have an easy view.

As shown in FIG. 5, the frequently used control keys can be arranged at the 0-th row in the first direction to allow a user to find these keys easily thereby further increasing the usage convenience. For example, the keys "Enter" and "Esc" can be placed at the 0-th row, 9-th column and the 0-th row, 5-th column, respectively, for allowing a user to easily see them. In other embodiments, for increasing the notability and usage convenience, the control keys of the coordinated virtual keyboard 13 can be indicated by icons. Most keys required for getting online can be found from the 1-st row to the 4-th row to thereby increase the usage convenience on online. In addition, the digits 0-9 and the function keys F1-F12 are arranged in a manner of allowing a user to easily remember.

The coordinated virtual keyboard 13 can display a part of the virtual keys to thereby reduce the area occupied on the display device 11. A first directional movement key or a second directional movement key can be further added to show the remaining virtual keys that are not displayed. In other embodiments, an up key 232 and a down key 234 can be used to display the remaining virtual keys.

The key combinations can be used to define various functions, for example, select, reset, virtual keyboard mode, virtual movement mode, virtual keyboard display, coordinate display, getting online, and the like.

It is applicable to have one or more digit keys combined with a special key to define various functions. For example, the digit key "*" 212 of the remote control 12 is combined with the digits 0-9 to provide multiple functional options. In this embodiment, pressing the combinations "*01"-"*49" is for select functions, "*50" for a reset function, "*51" for a virtual keyboard mode, "*52" for a virtual movement mode, "*53" for displaying a virtual keyboard, "*54" for a coordinate, "*55" for getting online, "*70" for displaying a virtual keyboard, "*71" for displaying an English coordinated virtual keyboard, "*72" for displaying a Chinese phonetic coordinated virtual keyboard, "*73" for displaying a Chinese Chang Jei coordinated virtual keyboard, "*74" for displaying a Japanese hiragana coordinated virtual keyboard, "*75" for displaying a Japanese katakana coordinated virtual keyboard, "*76" for displaying a Korean coordinated virtual keyboard, "*77" for displaying a symbol coordinated virtual keyboard, and "*78" for displaying a drawing coordinated virtual keyboard.

When the number of used keys is not constant, an interval is inputted for every set of coordinate digits to thereby separate each virtual key from the successively input coordinate digits, i.e., the interval is inserted between the virtual keys. The interval can be inputted by a special key of the remote control 12 or can be a predefined input time interval.

In this embodiment, the coordinate digits of each virtual key can be combined with "shift", "control", and "alt" virtual keys to thereby provide various key combinations. For example, if the "shift" virtual key corresponds to the digit "1", the "control" virtual key corresponds to the digit "2", and the "alt" virtual key corresponds to the digit "3", a pre-fix arrangement is used to provide various key combinations, such as sequentially pressing the digit keys "1", "2", "7" to input "R" and the digit keys "2", "1", "2" to input "ctrl+c". Alternatively, a post-fix arrangement can be used with the virtual keys "shift", "control", and "alt". For example, the digit keys "2", "7", "1" are sequentially pressed to input "R", and the digit keys "1", "2", "2" are sequentially pressed to input "ctrl+c".

As cited, a user is able to input one English alphabet or symbol by pressing two digit keys. In other embodiments, an interval between the virtual keys is inputted to separate each virtual key from the successively input coordinate digits. For example, a special key "#" is inputted to separate "r" from "a", i.e., an input sequence of "2", "7", "#", "1", "0" is formed.

For inputting "Ra", the digit keys "1", "2", "7" are sequentially pressed, and subsequently the keys "#", "1", "0" are pressed. In this case, even though the number of used keys is not constant, the input keys can be effectively separated.

In other embodiments, if the interval between the virtual keys is a predefined input time interval, such as 0.5 second, the waiting time of 0.5 second is performed immediately after the coordinate digits "2", "7" are inputted, and followed by inputting the coordinate digits "1", "0". In such a way, the number of pressed keys is reduced, and the accuracy of analyzing and reading the virtual keys is increased.

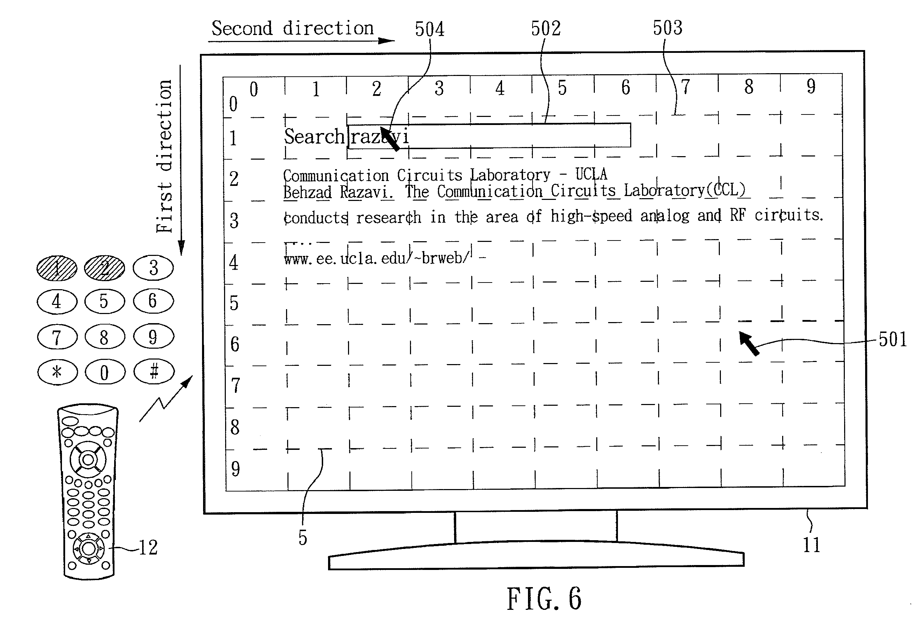

FIG. 6 is a schematic view of an input mode of the coordinated virtual input system using a remote control according to the invention. The remote control 12 is used to rapidly move a mouse cursor in the coordinated virtual input system. As shown in FIGS. 1, 2, and 6, the coordinated virtual input system includes a coordinated virtual mouse area 5, a display device 11, and the remote control 12.

The coordinated virtual mouse area 5 has multiple virtual locations, which are arranged according to a first direction and a second direction. Each virtual location corresponds to a set of coordinate digits in the first direction and the second direction.

The display device 11 displays an input image, a mouse cursor 501, and the coordinated virtual mouse area 5 in an on-screen display (OSD) manner.

The remote control 12 can remotely control the display device 11, and includes a movement function key 201, a set of direction keys 231-234, and a set of digit keys 210.

As shown in FIG. 6, the virtual locations of the coordinated virtual mouse area 5 are NxM display zones in a matrix arrangement, and the digit keys of the remote control 12 correspond to the NxM display zones. In this embodiment, the coordinated virtual mouse area 5 with the first direction and the second direction is arranged into 10x10 display zones, and the 10x10 display zones correspond to the digits 0-9 respectively.

By pressing the movement function key 201, the display device 11 displays the coordinated virtual mouse area 5 on its screen. By pressing the set of digit keys 210 to input a set of coordinate digits in the first direction and the second direction, the mouse cursor 501 is moved to a virtual location corresponding to the set of coordinate digits. Namely, when a set of digit keys of the remote control 12 are pressed, the mouse cursor is moved to the center of the display zone corresponding to the set of digit keys.

As shown in FIG. 6, when the digit keys "1", "2" of the remote control 12 are sequentially pressed, the mouse cursor 501 located at the right lower corner of the display device 11 is moved to the center of the display zone 503 for an input to a search field 502.

In other embodiments, after the mouse cursor 501 is moved to the center of the display zone 503, the display zone 503 and its neighboring display zones can be enlarged for allowing a user to conveniently browse.

When the mouse cursor 504 is located at the center of the display zone 503, the right direction key 231, the up direction key 232, the left direction key 233, or the down direction key 234 of the remote control 12 can be pressed to thereby move the mouse cursor 504 toward right, up, left, or down.

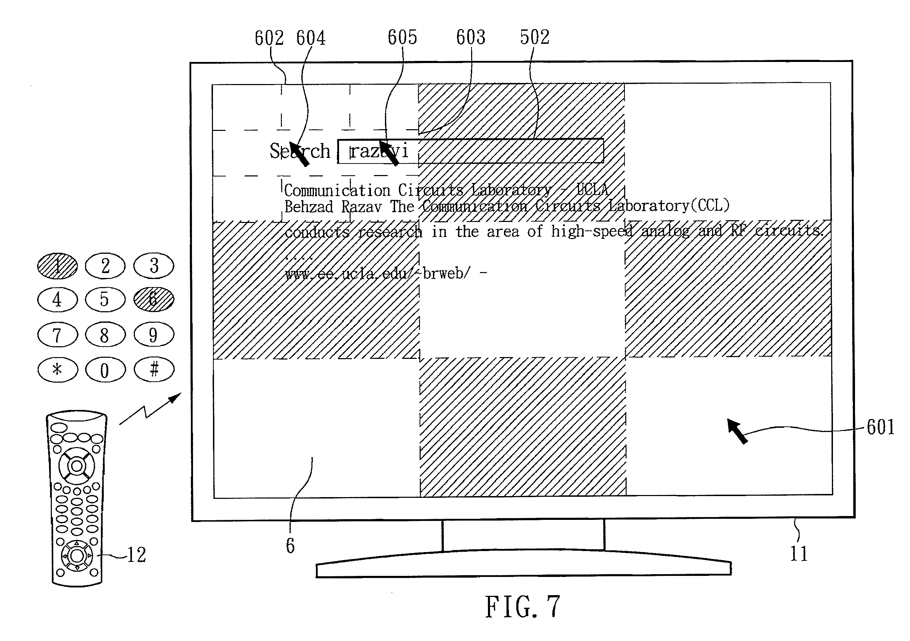

FIG. 7 is a schematic view of another input mode of the coordinated virtual input system using a remote control according to the invention. In FIG. 7, the remote control 12 is used to rapidly move a mouse cursor in the coordinated virtual input system. As shown in FIGS. 1, 2, and 7, the coordinated virtual input system includes a coordinated virtual mouse area 6, a display device 11, and the remote control 12.

The coordinated virtual mouse area 6 with the mouse cursor 601 is divided into NxM display zones in a matrix arrangement, and the NxM display zones correspond to the set of digit keys 210 of the remote control 12. When a digit key is pressed, the mouse cursor 601 is moved to the center of a display zone corresponding to the digit key.

As shown in FIG. 7, the area 6 with the mouse cursor 601 is divided into 3x3 display zones in a matrix arrangement. The 3x3 display zones correspond to the digit keys "1 "-"9" of the remote control 12. When the movement function key 201 of the remote control is pressed, the area 6 is displayed on the display device 11 and the mouse cursor 601 is located on the right lower corner of the display device 11. In this embodiment, since the display zone 602 with a search field corresponds to the digit key "1", the digit key "1" of the remote control 2 is pressed to move the mouse cursor 604 to the center of the display zone 602 corresponding to the digit key for an input to the search field.

When the mouse cursor 604 is located at the center of the display zone 602, the right direction key 231, the up direction key 232, the left direction key 233, or the down direction key 234 of the remote control 12 can be pressed to thereby move the mouse cursor 604 toward right, up, left, or down.

In other embodiments, after the mouse cursor 604 is moved to the center of the display zone 602, the display zone 602 can be further divided into 3x3 display sub-zones in a matrix arrangement, and the 3x3 display sub-zones correspond to the set of digit keys 210 of the remote control 12. When a digit key is pressed, the mouse cursor 604 is moved to the center of the display sub-zone corresponding to the digit key. As shown in FIG. 7, since the display sub-zone with the search field corresponds to the digit key "6", the digit key "6" of the remote control 12 is pressed to move the mouse cursor 604 to the center of the display sub-zone 603. Namely, the mouse cursor 605 is located at the center of the display sub-zone 603 to allow a user to input data.

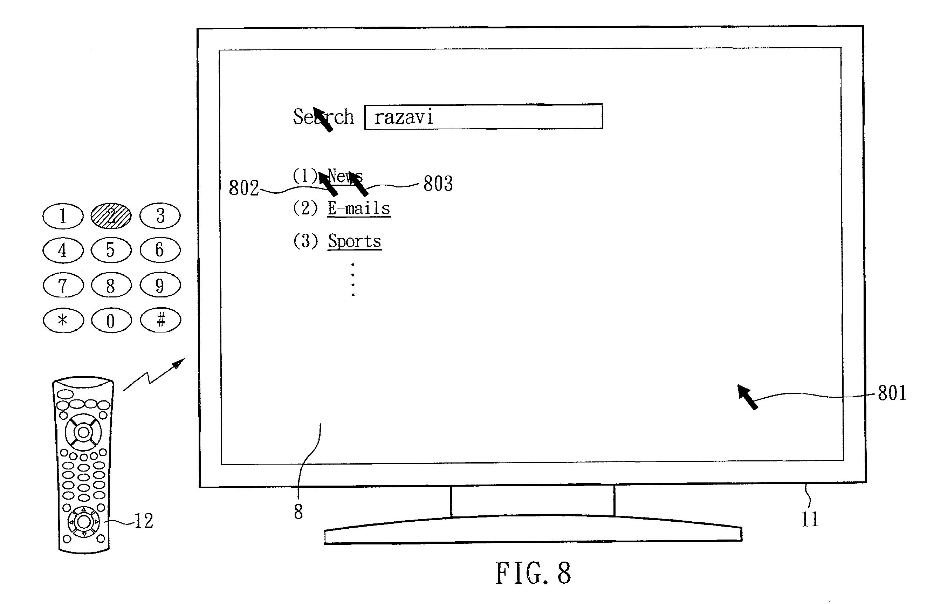

FIG. 8 is a schematic view of another input mode of the coordinated virtual input system using a remote control according to the invention. In FIG. 8, the remote control 12 is used to rapidly perform a menu selection in the coordinated virtual input system. As shown in FIGS. 1, 2, and 8, the coordinated virtual input system includes a virtual input area 8, a display device 11, and the remote control 12.

When a display content contains multiple menu items, such as News, E-mails, Sports, and the like, as shown in FIG. 8, the microcomputer control unit 23 first analyzes the display content, and adds a number option to each of the menu items. For example, a number option (1) is added in front of News, a number option (2) is added in front of E-mails, a number option (3) is added in front of Sports, and so on. As shown in FIG. 8, the mouse cursor 801 is located at the right lower corner of the display device 11, and for browsing a news, the digit key "1" of the remote control 12 is pressed to move the mouse cursor 801 close to the number option (1) corresponding to the digit key "1".

When the mouse cursor 802 is located close to the number option (1), the direction keys 231-234 of the remote control 12 can be pressed to thereby move the mouse cursor 604 toward right, up, left, or down.

In other embodiments, for browsing a news, the digit key "1" of the remote control 12 is pressed, and the microcomputer control unit 23 retrieves the display associated with the news through the network controller 27 or the network card 424 and displays the display of news on the display panel 24.

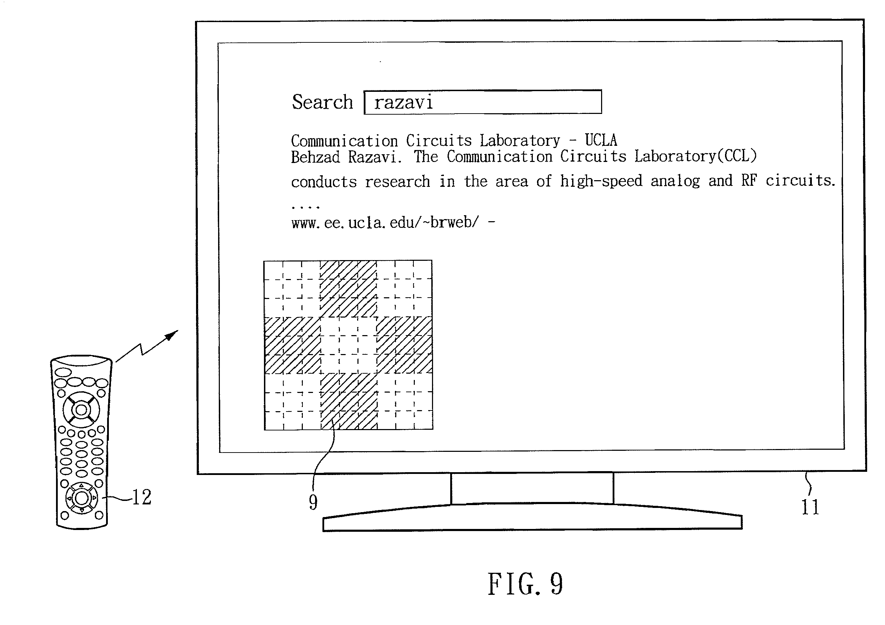

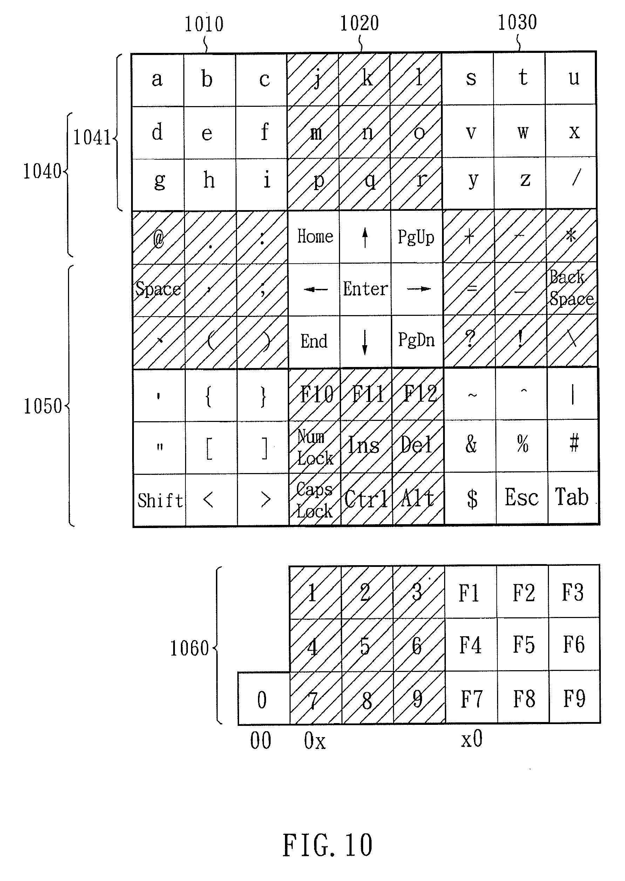

FIG. 9 is a schematic view of another input mode of the coordinated virtual input system using a remote control. FIG. 10 is a schematic view of a nine-square virtual keyboard arrangement in FIG. 9 according to the invention. As shown in FIGS. 9 and 10, the system includes the nine-square virtual keyboard 9, a display device 11, and a remote control 12.

The nine-square virtual keyboard 9 has multiple virtual keys, and each virtual key corresponds to a predefined symbol or operator option. The virtual keys are in a nine-square arrangement, and each virtual key in the nine-square arrangement corresponds to a set of coordinate digits.

The display device 11 displays an input image and the nine-square virtual keyboard 9 in an on-screen display (OSD) manner.

The remote control 12 remotely controls the display device 11. The remote control 12 includes an input function key 202, a set of direction keys 231-234, and a set of digit keys 210.

By pressing the input function key 202 of the remote control 12, the nine-square virtual keyboard 9 is shown on the display device 11. By pressing the set of digit keys 210, it is able to input digits corresponding to a virtual key on the nine-square virtual keyboard, thereby selecting the virtual key and a symbol corresponding to the virtual key.

As shown in FIG. 10, the nine-square virtual keyboard 9 is divided into nine squares in a 3x3 matrix arrangement. The 3x3 squares correspond to the digit keys "1"-"9" of the remote control 12.

Each of the nine squares is further divided into 9 sub-squares in a 3x3 matrix arrangement. A sub-square can be selected by firstly pressing a digit key corresponding to the sub-square, and a virtual key in the sub-square can be selected by secondly pressing a digit key corresponding to the virtual key.

In the nine-square arrangement, the English lowercase letters "a"-"z" are arranged in the first three rows, as indicated by the numeral 1041 in FIG. 10. The first four rows cover most characters for inputting a website address to get online. In addition, the digit keys "0"-"9" and the function keys F1-F9 are arranged to be easily remembered by a user. The keys Space, Enter, Back-space, Shift, Ctrl, and Tab correspond to the sets of digit keys "4" "4", "5" "5", "6" "6", "7" "7", "8" "8", and "9" "9", respectively, so a user can conveniently use the keys Space, Enter, Back-space, Shift, Ctrl, and Tab through the remote control 2.

When the virtual keys are in an English nine-square virtual keyboard, the lowercase letters "a"-"i" are shown in the square 1010 at the left upper corner and correspond to the digit keys "1"-"9" of the remote control 12, the lowercase letters "j"-"r" are shown in the middle upper square 1020 and correspond to the digit keys "1"-"9" of the remote control 12, and the lowercase letters "s"-"z" are shown in the square 1030 at the right upper corner and correspond to the digit keys "1"-"8" of the remote control 12. The virtual keyboard in FIG. 10 may be displayed by pressing the digit key "*" 212," digit key "# 211, or key combination "*53" of the remote control 12. When the digit key "*" 212, digit key "#" 211, or key combination "*53" of the remote control 12 is pressed again, the virtual keyboard is hidden.

Namely, a square can be selected by firstly pressing a digit key corresponding to the square, and a virtual key in the square can be selected by secondly pressing a digit key corresponding to the virtual key. For example, the digit key "1" is pressed to select the left upper square, and the digit key "1" is pressed again to select the English alphabet or letter "a" on the left upper corner. For inputting "razavo", the sets of digit keys "2" and "9", "1" and "1", "3" and "8", "1" and "1", "3" and "4", "1" and "9" are sequentially selected to complete the "razavi" input.

For inputting the digits "0"-"9", the key "0" is used to combine with one of the keys "0"-"9" to thereby obtain the digits "0"-"9". For example, the keys "0" and "0" are pressed to input the digit "0", the keys "0" and "1" are pressed to input the digit "1", the keys "0" and "2" are pressed to input the digit "2", and so on. For inputting the function keys F1-F9, one of the keys "0"-"9" is used to combine with the key "0" to thereby obtain the function keys F 1-F9. For example, the keys "1" and "0" are pressed to input the function key F1, the keys "2" and "0" are pressed to input the function key F2, the keys "3" and "0" are pressed to input the function key F3, and so on.

This embodiment can be used to select a menu item.

Only a part of keys in the nine-square virtual keyboard 9 is shown to thereby reduce the area occupied on the display device 11, and the up key 232 and the down key 234 can be used to see the remaining ones that are not yet shown. For example, only the partial virtual keys 1040, i.e., "a"-"*", in the nine-square virtual keyboard 9 are shown. The remaining virtual keys 1050 and 1060 in the nine-square virtual keyboard 9 can be shown to increase the usage convenience, or hidden to save the area occupied on the display device 11. In other embodiments, the display device 11 may only display partial virtual keys 1041, i.e., "a"-"z" of the nine-square virtual keyboard 9.

In other embodiments, when only the "a"-"*" partial virtual keys 1040 in the nine-square virtual keyboard 9 are shown on the display device 1, the left direction key 233 and the right key 231 can be used to widely move the nine-square virtual keyboard 9 to thereby see the remaining ones that are not shown.

In view of the foregoing, it is known that the coordinated virtual input system can combine a current TV remote control in practice to thereby reduce the cost, and the input modes can reduce the number of pressed keys on the remote control for a rapid input, and further increase friendliness on the human machine interface.

Although the present invention has been explained in relation to its preferred embodiment, it is to be understood that many other possible modifications and variations can be made without departing from the scope of the invention, which is defined by the claims.

## Claims

1. A coordinated virtual input system, comprising:
a coordinated virtual keyboard having multiple virtual keys, each being arranged according to a first direction and a second direction and corresponding to a set of coordinate digits in the first direction and the second direction;
a display device for displaying the coordinated virtual keyboard; and
a remote control having an input function key, a set of direction keys, and a set of digit keys for remotely controlling the display device,
wherein the display device displays the virtual keyboard in an on-screen display manner when the input function key is pressed, and the set of digit keys are used to input the coordinate digits respectively in the first direction and the second direction so as to select a virtual key corresponding to the coordinate digits and input a predefined symbol or user option corresponding to the virtual key.

2. The system as claimed in claim 1, wherein the remote control is used for a TV system implemented with the coordinated virtual input system.

3. The system as claimed in claim 1 or 2, wherein an interval is inputted for every set of coordinate digits so as to separate each virtual key when the virtual keys are successively inputted; preferably wherein the interval is inputted by a special key in the remote control, or the interval is a predefined input time interval.

4. The system as claimed in claim 1, 2 or 3, wherein control keys of the coordinated virtual keyboard are indicated by icons.

5. The system as claimed in claim 1, 2, 3 or 4, wherein the set of coordinate digits are comprised of two digits, one indicating a coordinate of the virtual key in the first direction and the other indicating the coordinate of the virtual key in the second direction.

6. The system as claimed in claim 5, wherein the coordinate in the second direction is highlighted for convenient selection and input, when the coordinate in the first direction is inputted.

7. The system as claimed in any preceding claim, wherein only a part of the virtual keys in the coordinated virtual keyboard are shown to reduce occupied area on the display, and a first or second directional movement key is included to thereby present the remaining virtual keys that are not shown.

8. The system as claimed in any preceding claim, wherein the predefined symbol corresponding to the virtual key is an English letter, a Chinese phonetic symbol, a Chang Jai radical, a Japanese phonetic alphabet, a French letter, or a German letter.

9. The system as claimed in any preceding claim, wherein at least one special key defined by the digit keys is combined with one or more digit keys to define different functions.

10. The system as claimed in claim 9, wherein at least one "*" key of the digit keys is combined with multiple "0"-"9" digit keys to provide function selections; preferably wherein an English coordinated virtual keyboard is shown by pressing "*" and "1" keys, a Chinese phonetic coordinated virtual keyboard is shown by pressing "*" and "2" keys, a Chinese Chang Jei coordinated virtual keyboard is shown by pressing "*" and "3" keys, a Japanese hiragana coordinated virtual keyboard is shown by pressing "*" and "4" keys, a Japanese katakana coordinated virtual keyboard is shown by pressing "*" and "5" keys, and a Korean coordinated virtual keyboard is shown by pressing "*" and "6" keys.

11. A coordinated virtual input system, comprising:
a coordinated virtual mouse area having multiple virtual locations arranged according to a first direction and a second direction and each virtual location corresponding to a set of coordinate digits respectively in the first direction and the second direction;
a display device for displaying a mouse cursor and the coordinated virtual mouse area; and
a remote control having a movement function key, a set of direction keys, and a set of digit keys for remotely controlling the mouse cursor,
wherein the coordinated virtual mouse area is displayed on the display device by pressing the movement function key, and the mouse cursor is moved to a virtual location corresponding to the set of coordinate digits when the set of digit keys are used to input the set of coordinate digits respectively in the first direction and the second direction.

12. The system as claimed in claim 11, wherein the virtual locations are NxM display zones in a matrix arrangement, and the mouse cursor is moved to the virtual location corresponding to the set of coordinate digits by pressing the set of digit keys; preferably wherein a virtual location containing the mouse cursor is divided into NxM display sub-zones in a matrix arrangement, and the NxM display sub-zones correspond to the set of digit keys so as to move the mouse cursor to a display sub-zone corresponding to a digit key when the digit key is pressed.

13. A coordinated virtual input system, comprising:
a virtual input area having multiple virtual locations;
a microcomputer control unit for analyzing a display content or a user option, so as to add a number option;
a display device for displaying a mouse cursor and the virtual input area; and
a remote control having a set of direction keys and a set of digit keys for remotely controlling the mouse cursor;
wherein the number option is selected by pressing the set of digit keys, and the mouse cursor is moved to the display content or user option corresponding to the number option.

14. A coordinated virtual input system, comprising:
a virtual keyboard having multiple virtual keys in a nine-square arrangement, each virtual key corresponding to a set of digits in the nine-square arrangement;
a display device for displaying the nine-square virtual keyboard; and
a remote control having an input function key, a set of direction keys, and a set of digit keys for remotely controlling the display,
wherein the nine-square virtual keyboard is shown on the display by pressing the input function key, and a symbol or menu item corresponding to a virtual key of the nine-square virtual keyboard is selected when the set of digit keys are used to input the set of digits in the nine-square arrangement.

15. The system as claimed in claim 14, wherein the nine-square virtual keyboard is comprised of nine squares, each with nine virtual keys, and wherein a first digit is inputted to select a square and a second digit is inputted to select the virtual key of the square, when the symbol or menu item corresponding to the virtual key is inputted.
